# FASCICULE DE BREVET EUROPEEN

(11) **EP 0 756 112 B1**
(45) Date de publication et mention de la délivrance du brevet: **02.06.1999**
(21) Numéro de dépôt: 96401679.4
(22) Date de dépôt: 26.07.1996
(51) Int. Cl.: F16H 61/24, F16H 59/04, G05G 9/047

(54) **Ensemble de commande à levier comprenant des moyens d'indexation perfectionnes**
Steuerhebelanordnung mit verbesserter Positionsarretierung
Control lever arrangement with improved indexing means

(30) Priorité: 27.07.1995 FR 9509154
(43) Date de publication de la demande: 29.01.1997
(73) Titulaire: MAGNETI MARELLI FRANCE, F-92000 Nanterre (FR)
(72) Inventeur: Gauthier, Christian, 92200 Neuilly sur Seine (FR)
(74) Mandataire: Texier, Christian

(56) Documents cités:
- EP-A- 0 568 928
- DE-A- 3 734 404
- US-A- 4 912 997
- PATENT ABSTRACTS OF JAPAN vol. 008, no. 087 (M-291), 20 Avril 1984 & JP-A-59 002933 (NISSAN JIDOSHA KK), 9 Janvier 1984,

## Description

La présente invention concerne le domaine des ensembles de commande à levier.

La présente invention s'applique tout particulièrement au domaine de la commande des boites de vitesses de véhicules automobiles.

De nombreux ensembles de commande à levier pour boites de vitesses ont déjà été proposés, que ce soit pour des boites de vitesses dites automatiques, des boites de vitesses mécaniques ou encore des boites de vitesses dites mécaniques robotisées.

La présente invention peut notamment s'appliquer à la commande de ces différents types de boites de vitesses.

Dans le cas des boites de vitesses mécaniques, le rapport d'engrenages engagé est choisi de façon univoque par le conducteur, à l'aide du levier et les commutations d'engrenages sont commandées mécaniquement et directement par le levier.

Dans les boites de vitesses automatiques, le conducteur n'a accès, par le biais du levier, qu'au choix d'un mode de conduite avant (petite ou grande vitesse) ou arrière et les positions point mort ou point neutre (parfois dénommées "position garage"). Sur cette base, un module pilote automatiquement la boite de vitesses tant dans un sens d'évolution des rapports que dans l'autre, c'est à dire tant dans le sens montée des rapports de vitesse que dans le sens de descente de ceux-ci, sans que le conducteur ne puisse alors imposer un choix précis de rapport.

Dans les boites de vitesses mécaniques robotisées, les boites sont munies d'actionneurs, généralement des actionneurs à fluide, aptes à agir sur la boite de vitesses pour exécuter des changements de rapport sur la base d'ordres émis par l'ensemble de commande à levier. Pour celà cet ensemble de commande comprend, outre le levier, des transducteurs de contrôle sensibles au déplacement du levier, pour définir des ordres de passage des rapports de la boite de vitesses et un module électronique qui reçoit les ordres de passage précités générés par les transducteurs de contrôle. Le module électronique pilote les actionneurs associés à la boite de vitesses. Le module électronique contrôle l'exécution, par les actionneurs, des ordres de passage émis par l'ensemble de commande, en fonction de la vitesse du véhicule, pour garantir que ces ordres sont compatibles avec cette vitesse.

La plupart de ces ensembles de commande à levier comprennent un boitier qui supporte un levier à pivotement selon une grille prédéterminée et imposée, généralement selon une grille en "h", c'est à dire selon une grille comprenant au moins deux trajets parallèles entre eux reliés par un trajet auxiliaire qui leur est transversal.

La présente invention a maintenant pour but de perfectionner les moyens d'indexation connus des ensembles de commande à levier.

Ce but est atteint selon la présente invention grâce à un ensemble de commande à levier comprenant un boitier et un levier monté à pivotement sur ce boitier, caractérisé par le fait qu'il comprend des moyens d'indexation du levier dans son pivotement, lesquels moyens d'indexation comprennent une platine liée à déplacement avec le levier, un élément d'indexation porté par la platine, et un guide lié à la platine pour amplifier l'amplitude de déplacement de l'élément d'indexation par rapport à celle du levier.

Selon une autre caractéristique avantageuse de la présente invention, la platine est liée à translation avec le levier, mais susceptible de rotation par rapport à celui-ci, autour de son axe.

Selon une autre caractéristique avantageuse de la présente invention, l'élément d'indexation est formé d'un plot d'indexation sollicité élastiquement contre des surfaces d'indexation formées sur le boitier.

Selon une autre caractéristique avantageuse de la présente invention, le guide est formé d'un doigt lié à la platine et engagé dans une gorge orientée généralement radialement par rapport à l'axe longitudinal du levier et formée sur le boitier.

D'autres caractéristiques, buts et avantages de la présente invention apparaitront à la lecture de la description détaillée qui va suivre et en regard des dessins annexés, donnés à titre d'exemples non limitatifs, et sur lesquels:
- la figure 1 représente une vue schématique en perspective d'un ensemble à levier conforme à un premier mode de réalisation de la présente invention,
- la figure 2 représente une vue schématique en perspective d'un ensemble à levier conforme à un deuxième mode de réalisation de la présente invention, et
- la figure 3 représente une vue en coupe longitudinale de l'ensemble conforme à ce deuxième mode de réalisation de la présente invention.

L'ensemble à levier conforme à la présente invention comprend principalement un boitier 100, un levier 200, un ensemble 300 de transducteurs contrôlé par le levier 200 et des moyens d'indexation 400.

Le boitier 100 peut faire l'objet de nombreuses variantes de réalisation. Il n'est d'ailleurs que partiellement représenté sur les figures annexées. De préférence le boitier 100 est formé en matière plastique.

Le levier 200 est de préférence formé d'une tige cylindrique rectiligne 202 montée à pivotement sur le boitier 100. Le levier 200 est centré sur un axe 201. Le levier 200 est avantageusement muni d'un pommeau sphérique 204 à son extrémité supérieure accessible à l'utilisateur.

Le levier 200 est adapté pour contrôler l'ensemble 300 lors de son déplacement.

Les moyens de guidage à déplacement du levier 200, sur le boitier 100, peuvent faire l'objet de diverses variantes. De préférence ces moyens de guidage comprennent une rotule 210 centrée sur l'axe 201, située sur la longueur du levier 200, et deux tourillons 212 et 214 orientés radialement par rapport à l'axe 201 et diamétralement opposés sur la rotule 210.

La rotule 210 et les tourillons 212 et 214 sont guidés par des parois 102 formées sur le boitier 100, lesquelles parois 102 autorisent d'une part un pivotement du levier autour de l'axe 213 des tourillons 212 et 214 et d'autre part des basculements du levier 200 autour du centre 211 de la rotule 210, dans des plans définis par les axes 201 et 213. Au cours de ces basculements les tourillons 212 et 214 se déplacent dans des chambres 104 et 106 définies par les parois 102.

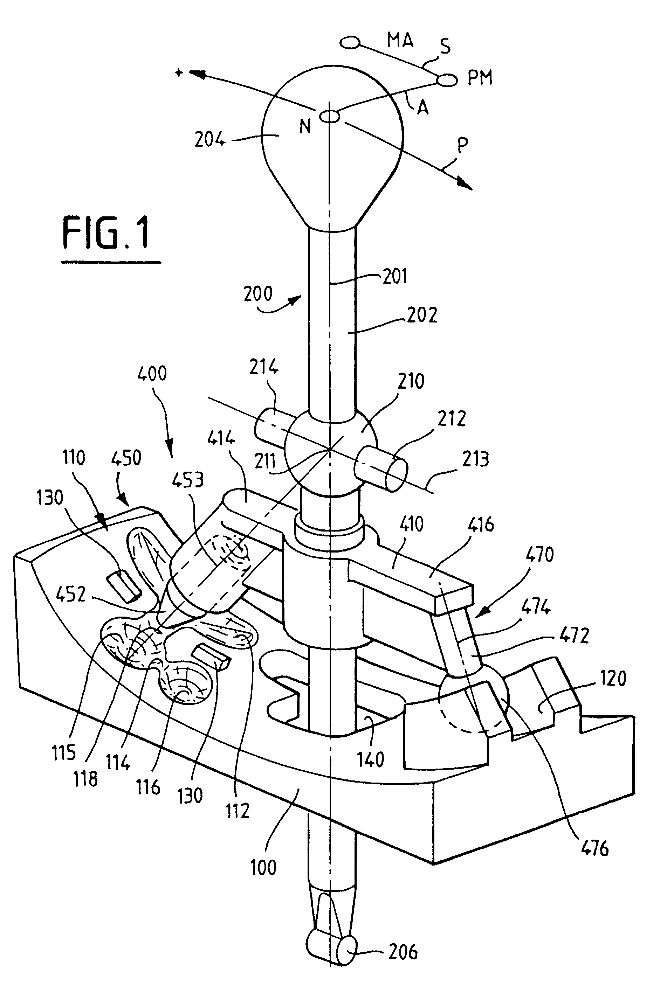

Le pivotement du levier 200 autour de l'axe 213 des tourillons 212 et 214, permet de déplacer le levier 200 selon un trajet dit auxiliaire, référencé A sur la figure 1. Les basculements du levier 200 dans deux plans, orthogonaux au pivotement précité, autour du centre 211 de la rotule 210, permettent de déplacer le levier 200 dans des plans dits principal et secondaire, lesquels sont référencés P et S sur la figure 1.

Ainsi les pivotements précités permettent de déplacer le levier 200 selon une grille généralement en"h".

Dans le cadre d'une application particulière et non limitative à la commande d'une boite de vitesses mécanique robotisée, le pivotement du levier 200 sur le trajet auxiliaire A permet de déplacer le levier 200 entre une position neutre N et une position point mort PM, le basculement du levier 200 dans le plan principal P permet de sélectionner une montée ou une descente respectivement du rapport à partir de la position neutre, et le basculement du levier 200 dans le plan secondaire S permet de sélectionner la marche arrière MA, à partir de la position point mort PM.

La pièce 216 constituant la rotule 210 et les tourillons 212 et 214 peut être formée par exemple par surmoulage sur le levier 200 ou encore être rapportée sur celui-ci et immobilisée par tous moyens appropriés, par exemple par une goupille.

L'ensemble 300 de transducteurs peut également faire l'objet de nombreux modes de réalisation. Il s'agit de préférence de transducteurs électriques commandés par les déplacements du levier 200, plus précisément par l'extrémité 206 du levier 200 opposée au pommeau 204.

Les moyens d'indexation 400 comprennent une platine 410 liée à déplacement avec le levier 200, un élément d'indexation 450 porté par la platine 410, et un guide 470 lié à la platine 410.

La platine 410 est liée à translation avec le levier 200, mais susceptible de rotation par rapport à celui-ci, autour de son axe 201. A cette fin la platine 410 comprend de préférence un fourreau 412 monté à rotation sur le levier 200 et pourvu d'au moins un bras 414 généralement radial par rapport à l'axe 201.

Le guide 470 est engagé dans une gorge 120 formée dans le boitier 100. La gorge 120 est orientée généralement radialement par rapport à l'axe longitudinal 201 du levier 200. Par ailleurs la gorge 120, ainsi que le plan défini par les axes 201, 453 et 474, s'étendent parallèlement à l'axe 213 des tourillons 212 et 214. Ainsi le guide 470 se déplace dans la gorge 120 lorsque le levier 200 est basculé dans le plan principal P ou le plan secondaire S. En revanche le guide 470 est immobilisé dans la gorge 120 lorsque le levier 200 est pivoté dans le plan auxiliaire A.

L'homme de l'art comprendra que la coopération définie entre le guide 470 et la gorge 120 permet d'amplifier l'amplitude de déplacement de l'élément d'indexation 450 par rapport à celle du levier 200, lorsque celui-ci est pivoté dans le plan auxiliaire A, soit autour de l'axe 213 des tourillons 212 et 214.

Le rapport de multiplication est égal au rapport entre la distance séparant le plot 450 du doigt 470 d'une part et la distance séparant le doigt 470 du levier 200 d'autre part.

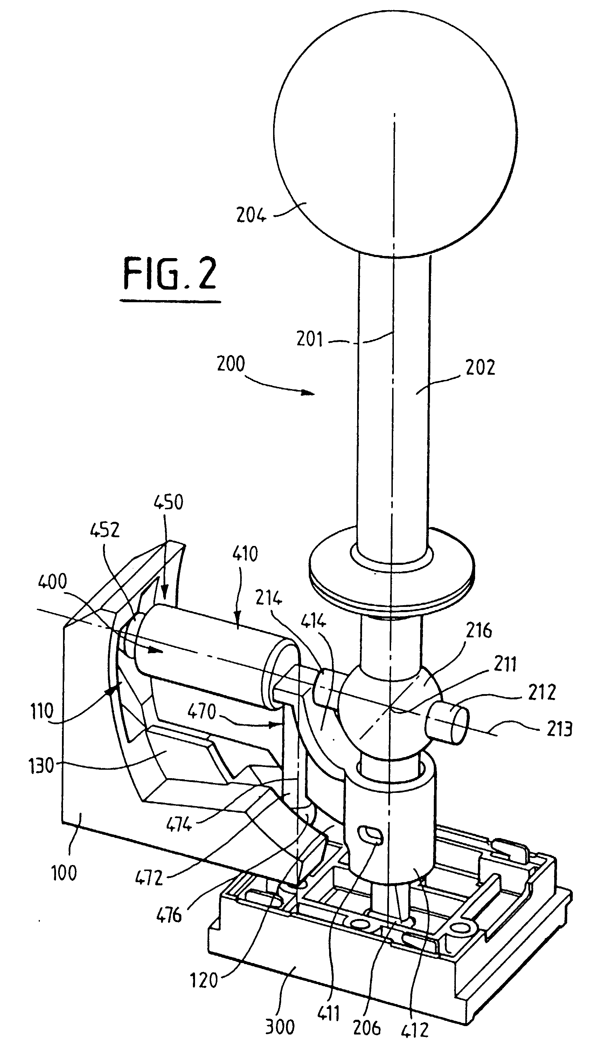

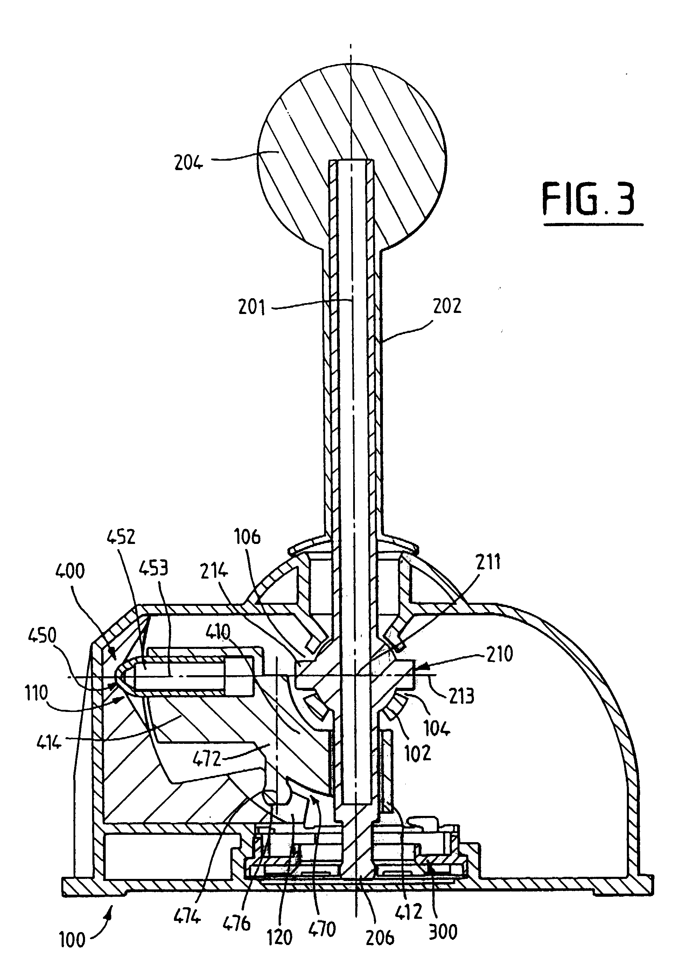

Selon le mode de réalisation représenté sur les figures 2 et 3, il est prévu un seul bras 414 solidaire du fourreau 412. Ce bras 414 possède un plan de symétrie passant par l'axe 201. Il est incurvé autour du centre 211 de la rotule 210. Le bras 414 s'étend ainsi de préférence sur environ 90° autour de cette rotule 210.

Par contre selon le mode de réalisation représenté sur la figure 1, il est prévu deux bras 414, 416 radiaux, solidaires du fourreau 412 et diamétralement opposés par rapport à l'axe 201.

L'élément d'indexation 450 est formé d'un plot d'indexation 452 sollicité élastiquement contre des surfaces d'indexation 110 formées sur le boîtier 100.

L'axe longitudinal 453 du plot 452 est de préférence sécant du centre 211 de la rotule 210.

Selon les figures 2 et 3, l'axe 453 du plot 452 est sensiblement orthogonal à l'axe longitudinal 201 du levier 200 et coplanaire de l'axe 201.

Selon la figure 1 l'axe 453 du plot 452 est incliné d'environ 45° par rapport à l'axe longitudinal 201 du levier 200 et également coplanaire de l'axe 201.

Le guide 470 est formé d'un doigt 472 lié à la platine 410 et engagé dans la gorge 120.

L'axe longitudinal 474 du doigt 472 est de préférence au moins sensiblement coplanaire de l'axe 201 du levier 200 et de l'axe 453 du plot 452.

Selon les figures 2 et 3, le doigt 472 est placé du même côté du levier 200 que le plot 452. L'axe 474 du doigt 472 est parallèle à l'axe longitudinal 201 du levier 200. Il pourrait aussi être incliné par exemple de l'ordre de 30° par rapport à cet axe 201.

En revanche selon la figure 1, le doigt 472 est placé du côté opposé au plot 452 par rapport à l'axe 201 du levier 200. L'axe 474 du doigt 472 est incliné par exemple de l'ordre de 45° par rapport à l'axe longitudinal 201 du levier 200.

De préférence l'extrémité libre du doigt 472, engagée dans la gorge 120 comporte une protubérance sphérique 476. Le diamètre de celle-ci est complémentaire de la largeur de la gorge 120.

L'extrémité du levier 200 opposée au pommeau 204 traverse de préférence un logement 140 formé dans le boitier 100 (voir figure 1). Le contour de ce logement 140 correspond à l'enveloppe d'un trajet en "h" suivi par le levier 200.

La paroi du boitier 100 définit par ailleurs un réseau de surfaces 110 d'indexation coopérant avec le plot 452.

Selon le mode de réalisation particulier et non limitatif représenté sur les figures annexées, ce réseau de surfaces comprend :
- un canal principal 112,
- un canal secondaire 114,
- deux creusures 115 et 116, et
- un canal auxiliaire 118.

Ce réseau de surfaces 110 est formé sur une calotte généralement sphérique du boitier 100, centrée sur la rotule 210.

Le canal principal 112 et le canal secondaire 114 s'étendent sensiblement parallèlement entre eux et parallèlement à l'axe 213 des tourillons 212 et 214. Le canal secondaire 114 possède une extension sensiblement égale à la moitié de celle du canal principal 112. L'une des extrémités du canal secondaire 114 est raccordée à mi-longueur du canal principal 112 par le canal auxiliaire 118 qui leur est transversal.

Les deux creusures 115 et 116, d'enveloppe concave globalement sphérique sont formées aux extrémités du canal secondaire 114.

Le levier 200 occupe une position stable lorsque le plot 450 repose dans l'une des creusures 115 ou 116, respectivement en position de point mort PM ou en position de marche arrière MA. Par contre le levier 200 occupe une position instable lorsque le plot 450 est placé dans l'un des canaux principal 112, secondaire 114 ou auxiliaire 118. Bien entendu le plot 450 est déplacé respectivement dans les plans principal 112, secondaire 114 et auxiliaire 118 lorsque le levier 200 est lui même déplacé dans les plans précités principal P, secondaire S et auxiliaire A.

On notera par ailleurs que de préférence une butée 130 est placée sur la paroi du boitier 100 entre les extrémités adjacentes des deux canaux principal 112 et secondaire 114 pour éviter un passage direct du plot 450 entre ces deux extrémités. Ainsi pour passer de l'une de ces extrémités vers l'autre (correspondant à un passage de la position point mort vers une montée de rapport en marche avant, ou inversement), le plot 450 doit emprunter le canal auxiliaire 118. De ce fait le levier doit passer par les positions point mort PM et neutre N.

Cette disposition est très importante dans le cadre de la présente invention. Elle permet en effet de disposer d'une butée 130 de largeur importante, grâce à l'amplification du mouvement du plot 450 par rapport au mouvement du levier 200, et en particulier d'une largeur de butée 130 supérieure à celle d'une toile fonctionnellement équivalente qui aurait pu être prévue au niveau du logement 140.

La platine 410 peut être immobilisée à translation sur le levier 200 par tous moyens appropriés. Selon la représentation des figures, la platine 410 est immobilisée sur le levier 200 grâce à une goupille en prise avec le levier 200 et engagée dans une rainure périphérique 411 formée dans le fourreau 410.

Bien entendu la présente invention n'est pas limitée aux modes de réalisation précédemment décrits, mais s'étend à toutes variantes conformes à son esprit.

En particulier la présente invention n'est pas limitée à la grille particulière de déplacement du levier 200 précédemment décrite.

## Revendications

1. Ensemble de commande à levier, notamment pour boite de vitesses de véhicules, comprenant un boitier (100) et un levier (200) monté à pivotement sur ce boitier (100), caractérisé par le fait qu'il comprend des moyens (400) d'indexation du levier (200) dans son pivotement, lesquels moyens d'indexation (400) comprennent une platine (410) liée à déplacement avec le levier (200), un élément d'indexation (450) porté par la platine (410), et un guide (470) lié à la platine (410) pour amplifier l'amplitude de déplacement de l'élément d'indexation (450) par rapport à celle du levier (200).

2. Ensemble selon la revendication 1, caractérisé par le fait que la platine (410) est liée à translation avec le levier (200), mais susceptible de rotation par rapport à celui-ci, autour de son axe (201).

3. Ensemble selon l'une des revendications 1 ou 2, caractérisé par le fait que l'élément d'indexation (450) est formé d'un plot d'indexation sollicité élastiquement contre des surfaces d'indexation (110) formées sur le boitier (100).

4. Ensemble selon l'une des revendications 1 à 3, caractérisé par le fait que le guide (470) est formé d'un doigt (472) lié à la platine (410) et engagé dans une gorge (120) orientée généralement radialement par rapport à l'axe longitudinal (201) du levier (200) et formée sur le boitier (100).

5. Ensemble selon l'une des revendications 1 à 4, caractérisé par le fait que le levier (200) est guidé à pivotement sur le boitier (100) par une rotule (210) centrée sur l'axe (201) du levier (200) et deux tourillons (212, 214) orientés radialement par rapport à l'axe (201) du levier (200) et diamétralement opposés sur la rotule (210).

6. Ensemble selon l'une des revendications 1 à 5, caractérisé par le fait qu'il comprend des moyens (140, 110) imposant un déplacement du levier (200) selon une grille généralement en"h".

7. Ensemble selon l'une des revendications 1 à 6, caractérisé par le fait que la platine (410) comprend un fourreau (412) monté à rotation sur le levier (200) et pourvu d'au moins un bras (414) généralement radial par rapport à l'axe (201) du levier (200).

8. Ensemble selon l'une des revendications 1 à 7, caractérisé par le fait que la platine (410) comprend un fourreau (412) monté à rotation sur le levier (200) et pourvu de deux bras (414, 416) radiaux, solidaires du fourreau (412) et diamétralement opposés par rapport à l'axe (201) du levier (200).

9. Ensemble selon la revendication 3, caractérisé par le fait que l'axe longitudinal (453) du plot (452) est sécant du centre (211) de la rotule (210).

10. Ensemble selon l'une des revendications 3 ou 9, caractérisé par le fait que l'axe du plot (452) est incliné par rapport à l'axe longitudinal (201) du levier (200) et coplanaire de cet axe.

11. Ensemble selon l'une des revendications 3 ou 9, caractérisé par le fait que l'axe du plot (452) est sensiblement orthogonal à l'axe longitudinal (201) du levier (200) et également coplanaire de cet axe (201).

12. Ensemble selon l'une des revendications 1 à 11, caractérisé par le fait que l'axe longitudinal (474) du doigt (472) formant guide est au moins sensiblement coplanaire de l'axe (201) du levier (200) et de l'axe (453) du plot (452).

13. Ensemble selon l'une des revendications 1 à 12, caractérisé par le fait que le doigt (472) formant guide est placé du côté opposé au plot (452) d'indexage par rapport à l'axe (201) du levier(200).

14. Ensemble selon l'une des revendications 1 à 12, caractérisé par le fait que le doigt (472) formant guide est placé du même côté du levier (200) que le plot (452) d'indexage .

15. Ensemble selon l'une des revendications 1 à 14, caractérisé par le fait qu'il comprend des tourillons (212, 214) servant d'articulation au levier (200), dont l'axe (213) est coplanaire de l'axe (201) du levier (200), du plan de symétrie d'une gorge (120) recevant le guide (470) ainsi que de l'axe (453) du plot d'indexage (452) et de l'axe (474) du guide (470).

16. Ensemble selon l'une des revendications 1 à 15, caractérisé par le fait que le boitier (100) définit un réseau de surfaces d'indexation (110) coopérant avec le doigt (472) qui comprend :
- un canal principal (112),
- un canal secondaire (114) parallèle au canal principal (112),
- deux creusures (115, 116) situées aux extrémités du canal secondaire (114), et
- un canal auxiliaire (118) qui relie transversalement l'une des extrémités du canal secondaire (114) sensiblement à mi-longueur du canal principal (112).

17. Ensemble selon la revendication 16, caractérisé par le fait que une butée (130) est placée sur la paroi du boitier (100) entre les extrémités adjacentes des deux trajets principal (112) et secondaire (114) pour éviter un passage direct du plot d'indexage (450) entre ces deux extrémités.

## Patentansprüche

1. Steuerhebelanordnung, die insbesondere für das Schaltgetriebe eines Kraftfahrzeuges eingesetzt wird, und das ein Gehäuse (100) und einen Hebel (200), welcher schwenkbar an dem Gehäuse (100) befestigt ist, enthält
**dadurch gekennzeichnet, daß**
sie Mittel (400) für die Indexierung des Hebels (200) während seiner Schwenkbewegung aufweist, wobei diese Indexierungsmittel (400) eine Platine (410) enthalten, die verschiebbar mit dem Hebel (200) verbunden ist, sowie ein von der Platine (410) getragenes Indexierungselement (450), und eine mit der Platine (410) verbundene Führung (470), um die Amplitude der Bewegung des Indexierungselementes (450) im Vergleich zu der Bewegung des Hebels (200) zu verstärken.

2. Steuerhebelanordnung nach Anspruch 1,
**dadurch gekennzeichnet, daß**
die Platine (410) translierend mit dem Hebel (200) verbunden ist, sich jedoch gegenüber diesem um dessen Achse (201) drehen kann.

3. Steuerhebelanordnung nach einem der Ansprüche 1 oder 2,
**dadurch gekennzeichnet, daß**
das Indexierungselement (450) aus einem Indexierstecker besteht, welcher elastisch gegen die auf dem Gehäuse (100) ausgebildeten Indexierungsflächen (110) gedrückt werden kann.

4. Steuerhebelanordnung nach einem der Ansprüche 1 bis 3,
**dadurch gekennzeichnet, daß**
die Führung (470) aus einem Zapfen (472) besteht, der mit der Platine (410) verbunden und in einer Nut (120) sitzt, die im wesentlichen radial zur Längsachse (201) des Hebels (200) ausgerichtet und in das Gehäuse (100) eingebracht ist.

5. Steuerhebelanordnung nach einem der Ansprüche 1 bis 4,
**dadurch gekennzeichnet, daß**
der Hebel (200) auf dem Gehäuse (100) schwenkbar mit Hilfe eines Kugelgelenkes (210), welches auf die Achse (201) des Hebels (200) zentriert ist, und zwei Kippzapfen (212, 214) geführt wird, die radial gegenüber der Achse (201) des Hebels (200) und diametral gegenüberliegend auf dem Kugelgelenk (210) ausgerichtet sind.

6. Steuerhebelanordnung nach einem der Ansprüche 1 bis 5,
**dadurch gekennzeichnet, daß**
sie Mittel (140, 110) aufweist, die eine Bewegung des Hebels in einem weitgehend "H-förmigen" Raster vorgeben.

7. Steuerhebelanordnung nach einem der Ansprüche 1 bis 6,
**dadurch gekennzeichnet, daß**
die Platine (410) eine Manschette (412) aufweist, die drehbar auf dem Hebel (200) montiert ist und mindestens einen Arm (414) enthält, der radial gegenüber der Achse (201) des Hebels (200) verläuft.

8. Steuerhebelanordnung nach einem der Ansprüche 1 bis 7,
**dadurch gekennzeichnet, daß**
die Platine (410) eine Manschette (412) aufweist, die drehbar an dem Hebel (200) befestigt und mit zwei radialen Armen (414, 416) ausgestattet ist, die mit der Manschette (412) fest verbunden und diametral gegenüberliegend zu der Achse (201) des Hebels (200) angeordnet sind.

9. Steuerhebelanordnung nach Anspruch 3,
**dadurch gekennzeichnet, daß**
die Längsachse (453) des Steckers (452) das Zentrum (211) des Kugelgelenkes (210) schneidet.

10. Steuerhebelanordnung nach einem der Ansprüche 3 oder 9,
**dadurch gekennzeichnet, daß**
die Achse des Steckers (452) gegenüber der Längsachse (201) des Hebels (200) geneigt ist und koplanar zu dieser Achse verläuft.

11. Steuerhebelanordnung nach einem der Ansprüche 3 oder 9,
**dadurch gekennzeichnet, daß**
die Achse des Steckers (452) im wesentlichen orthogonal zur Längsachse (201) des Hebels (200) und ebenfalls koplanar zu dieser Achse (201) verläuft.

12. Steuerhebelanordnung nach einem der Ansprüche 1 bis 11,
**dadurch gekennzeichnet, daß**
die Längsachse (474) des die Führung bildenden Fingers (472) mindestens weitgehend koplanar zur Achse (201) des Hebels (200) und zur Achse (453) des Steckers (452) verläuft.

13. Steuerhebelanordnung nach einem der Ansprüche 1 bis 12,
**dadurch gekennzeichnet, daß**
der die Führung bildende Zapfen (472) an der gegenüberliegenden Seite des Indexiersteckers (452) gegenüber der Achse (201) des Hebels (200) angeordnet ist.

14. Steuerhebelanordnung nach einem der Ansprüche 1 bis 12,
**dadurch gekennzeichnet, daß**
der die Führung bildende Zapfen (472) auf der gleichen Seite des Hebels (200) angeordnet ist, wie der Indexierstecker (452).

15. Steuerhebelanordnung nach einem der Ansprüche 1 bis 14,
**dadurch gekennzeichnet, daß**
sie Kippzapfen (212, 214) aufweist, die als Anlenkung des Hebels (200) dienen, deren Achse (213) koplanar zur Achse (201) des Hebels (200) und der Symmetrieebene einer Nut (120), in welche die Führung (470) eingesetzt ist, sowie koplanar zur Achse (453) des Indexiersteckers (452) und koplanar zur Achse (474) der Führung (470) verläuft.

16. Steuerhebelanordnung nach einem der Ansprüche 1 bis 15,
**dadurch gekennzeichnet, daß**
das Gehäuse (100) ein Netz von mit dem Zapfen (472) zusammenwirkenden Indexierflächen (110) bildet, das folgendes aufweist:
- einen Hauptkanal (112)
- einen parallel zu diesem Hauptkanal (112) verlaufenden sekundären Kanal (114),
- zwei Einsenkungen (115, 116), welche an den Endabschnitten dieses sekundären Kanals (114) vorgesehen sind, und
- einen Hilfskanal (118), welcher in Querrichtung einen der Endabschnitte des sekundären Kanals (114) im wesentlichen in der halben Länge des Hauptkanals (112) anschließt.

17. Steuerhebelanordnung nach Anspruch 16,
**dadurch gekennzeichnet, daß**
auf der Wand des Gehäuses (100) zwischen den Enden von zwei benachbarten Hauptpfaden (112) und sekundären Pfaden (114) ein Widerlager (130) vorgesehen ist, um einen direkten Durchgang des Indexiersteckers (450) zwischen diesen beiden Endabschnitten zu verhindern.

## Claims

1. A control lever arrangement, in particular for a vehicle gear box, the arrangement comprising a housing (100) and a lever (200) pivotally mounted on the housing (100), the arrangement being characterized by the fact that it comprises indexing means (400) for indexing pivoting of the lever (200), which indexing means (400) comprise a plate (410) constrained to move with the lever (200), an indexing element (450) carried by the plate (410), and a guide (470) associated with the plate (410) to amplify the amplitude of the displacement of the indexing element (450) relative to the displacement of the lever (200).

2. An arrangement according to claim 1, characterized by the fact that the plate (410) is constrained to move in translation with the lever (200), but is capable of rotating relative thereto about its axis (201).

3. An arrangement according to claim 1 or 2, characterized by the fact that the indexing element (450) is formed by an indexing stud urged resiliently against indexing surfaces (110) formed on the housing (100).

4. An arrangement according to any one of claims 1 to 3, characterized by the fact that the guide (470) is formed by a finger (472) associated with the plate (410) and engaged in a groove (120) extending generally radially relative to the longitudinal axis (201) of the lever (200) and formed on the housing (100).

5. An arrangement according to any one of claims 1 to 4, characterized by the fact that the lever (200) is guided to pivot on the housing (100) by a ball (210) centered on the axis (201) of the lever (200) and by two stub axles (212, 214) extending from the ball (210), radially relative to the axis (201) of the lever (200) and in diametrically opposite directions.

6. An arrangement according to any one of claims 1 to 5, characterized by the fact that it comprises means (140,110) that constrain the lever (200) to move in a generally h-shaped gate.

7. An arrangement according to any one of claims 1 to 6, characterized in that the plate (410) has a bushing (412) rotatably mounted on the lever (200) and provided with at least one arm (414) extending generally radially relative to the axis (201) of the lever (200).

8. An arrangement according to any one of claims 1 to 7, characterized by the fact that the plate (410) comprises a bushing (412) mounted to rotate on the lever (200) and provided with two radial arms (414, 416) secured to the bushing (412) and extending in diametrically opposite directions about the axis (201) of the lever (200).

9. An arrangement according to claim 3, characterized by the fact that the longitudinal axis (453) of the stud (452) intersects the center (211) of the ball (210).

10. An arrangement according to claim 3 or 9, characterized by the fact that the axis of the stud (452) is inclined relative to the longitudinal axis (201) of the lever (200) and is coplanar with said axis.

11. An arrangement according to claim 3 or 9, characterized by the fact that the axis of the stud (452) is substantially orthogonal to the longitudinal axis (201) of the lever (200) and is also coplanar with said axis (201).

12. An arrangement according to any one of claims 1 to 11, characterized by the fact that the longitudinal axis (474) of the guide-forming finger (472) is at least substantially coplanar with the axis (201) of the lever (200) and with the axis (453) of the stud (452).

13. An arrangement according to any one of claims 1 to 12, characterized by the fact that the guide-forming finger (472) is placed on the side of the lever (200) that is opposite about the axis (201) to the side on which the indexing finger (452) is placed.

14. An arrangement according to any one of claims 1 to 12, characterized in that the guide-forming finger (472) is on the same side of the lever (200) as the indexing stud (452).

15. An arrangement according to any one of claims 1 to 14, characterized by the fact that it has stub axles (212, 214) for hinging the lever (200), the axis (213) thereof being coplanar with the axis (201) of the lever (200), the plane of symmetry of a groove (120) receiving the guide (470) and the axis (453) of the indexing stud (452) and the axis (474) of the guide (470).

16. An arrangement according to any one of claims 1 to 15, characterized by the fact that the housing (100) defines a network of indexing surfaces (110) co-operating with the finger (472) and comprising:
· a main channel (112);
· a secondary channel (114) parallel to the main channel (112);
· two hollows (115, 116) situated at the ends of the secondary channel (114); and
· an auxiliary channel (118) which connects transversely one of the ends of the secondary channel (114) to substantially halfway along the length of main channel (112).

17. An arrangement according to claim 16, characterized by the fact that an abutment (130) is placed on the wall of the housing (100) between the adjacent ends of the main and secondary paths (112, 114) to prevent the indexing stud (450) passing directly between said two ends.
